# EUROPÄISCHE PATENTSCHRIFT

(11) **EP 0 435 006 B1**
(45) Veröffentlichungstag und Bekanntmachung des Hinweises auf die Patenterteilung: **07.02.1996**
(21) Anmeldenummer: 90122795.9
(22) Anmeldetag: 29.11.1990
(51) Int. Cl.: G02B 6/04

(54) **Faseroptischer Scanner**
Fibre optic scanner
Système de balayage à fibres optiques

(30) Priorität: 23.12.1989 DE 3942771
(43) Veröffentlichungstag der Anmeldung: 03.07.1991
(73) Patentinhaber: DORNIER GmbH, D-88039 Friedrichshafen (DE)
(72) Erfinder: Eibert, Max, Dr.-Dipl.-Phys., W-7990 Friedrichshafen 24 (DE); Schwanke, Ulrich, Dipl.-Ing., W-7758 Stetten (DE)

(56) Entgegenhaltungen:
- EP-A- 0 115 765
- GB-A- 2 111 716
- US-A- 3 401 232
- US-A- 4 409 477
- PATENT ABSTRACTS OF JAPAN vol. 7, no. 30 (P-173) 5 February 1983 & JP-A-57 181 522
- Schröder, Gottfried: Technische Optik; Seiten 114-119, 7. Aufl., Würzburg: Vogel 1990.

## Beschreibung

Die Erfindung betrifft einen faseroptischen Scanner nach dem Oberbegriff des Anspruchs 1.

Faseroptische Scanner sind optomechanische Geräte, die der Ablenkung von Lichtstrahlen dienen. So kann damit z.B. die auf eine Zeile fallende Lichtinformation in eine Folge von Lichtpulsen in einer Glasfaser umgewandelt werden (faseroptischer Zeilenscanner).

Bekannt sind zu diesem Zweck Schwingspiegel oder rotierende Polygonspiegel. Bei beiden Systemen sind die mechanischen Toleranzen sehr eng einzuhalten. Meistens begrenzen diese mechanisch bewegten Teile die mögliche Abbildungsgeschwindigkeit.

Aus der **US 3,401,232** ist ein faseroptischer Scanner bekannt, der ein Sendeund ein Empfangsteil aufweist. Sende- und Empfangsteil umfassen jeweils ein Glasfaserarray, wobei die einen Enden der Glasfasern der Arrays kreisförmig angeordnet sind. Mit jeweils einer Glasfaser, deren Ende um eine Achse rotiert, wird das zu sendende bzw. das empfangene Licht auf die kreisförmig angeordneten Enden der Array-Fasern geleitet. Für den Antrieb der rotierenden Glasfasern in Sendeteil und Empfangsteil ist ein gemeinsamer Antrieb vorgesehen. Diese Vorrichtung bildet den Oberbegriff des Anspruchs 1. Die Glasfaserarrays von Sendeteil und Empfangsteil sind derart angeordnet, daß die durch die Enden der Glasfasern der beiden Arrays gebildeten Kreise konzentrisch zueinander angeordnet sind.

Aus der **JP 57-181522 (A)** ist ein faseroptischer Scanner bekannt, bei dem das von einer Lichtquelle ausgehende Licht auf einen rotierenden, zu seiner Rotationsachse gekippten Spiegel fällt. Das am rotierenden Spiegel abgelenkte Licht fällt nach einer weiteren Ablenkung an einem festen Spiegel auf die kreisförmig angeordneten einen Enden eines Glasfaserarrays. Die anderen Glasfaserenden des Arrays sind zeilenförmig angeordnet.

Aufgabe der Erfindung ist es, einen faseroptischen Scanner mit Sendeteil und Empfangsteil zu schaffen, mit dem die räumliche und zeitliche Kopplung zwischen Sende- und Empfangsteil verbessert wird.

Diese Aufgabe wird mit dem Gegenstand des Anspruchs 1 gelöst.

Erfindungsgemäß ist ein Sendeteil mit einem rotierenden Element vorgesehen, das das Licht von einem punktförmigen Eingang auf die kreisförmig angeordneten Anfänge von Glasfasern eines Glasfaserarrays lenkt. Die Enden der Glasfasern können beliebig, bevorzugt in einer Linie oder einer Geraden, angeordnet sein. In einem Sendeteil ist eine dazu inverse Komponente vorgesehen, bei der Licht von einem Glasfaserarray beliebiger Gestalt aufgenommen wird. Die Glasfasern sind so angeordnet, daß ihre Enden auf einem Kreis liegen, von dem aus das Licht über ein rotierendes Element auf einen Licht aufnehmenden Ort (Ausgang) gelenkt wird.

Gegenüber anderen Scanmechanismen wie Polygon oder Schwingspiegel ist beim erfindungsgemäßen Scanner die Baugröße kompakt und verändert sich nur linear mit der zu scannenden Strahlapertur D. Es können nahezu beliebig große Strahlaperturen fast beliebig schnell gescannt werden. Durch den modularen Aufbau ist eine Anpassung der Scangeometrien durch ein Austauschen des Glasfaserarrays und der Objektivs möglich.

Als Lichtquellen können z.B. Leuchtdioden oder glasfasergekoppelte Leuchtdioden benützt werden. Es können z.B. modulierte CW-Laserdioden, oder CW-Laser verwendet werden. Bei diesen oder anderen kontinuierlich arbeitenden Lichtquellen entfällt eine Synchronisierung, die bei gepulsten Leuchtdioden oder Laser- dioden verwendet werden kann.

Das Glasfaserarray ist ein Querschnittswandler, mit dem eine kreisförmige Anordnung der Glasfasern in eine zeilenförmige Anordnung transformiert wird (Brennebenentransformation von einem Kreis in eine Linie). Es besteht z.B. aus einer Anzahl von Quarz-Monofasern, die einen Kerndurchmesser von 0,2 mm haben können. Es können auch andere Multimode- oder Monomodefasern verwendet werden. Die Anzahl der Fasern beträgt im nachstehend gezeigten Beispiel 64. Die Anzahl der Fasern kann beliebig eingestellt werden. Die maximale Anzahl der Fasern wird nur durch das Fertigungsverfahren des Arrays begrenzt. Die Art der Fassung lässt eine Abweichung von der Position der Glasfasern und eine Abweichung von der Rundheit des Glasfaserarrays von z.B. 0,005 mm zu.

Die Flexibilität der Glasfasern hat ferner den Vorteil, daß sie so positioniert werden können, daß Abbildungsfehler des Objektivs, das am Eingang oder am Ausgang des Geräts angeordnet ist, ausgeglichen werden können. Die Glasfasern sind in der Brennebene dieses Objektivs beliebig angeordnet, so daß beliebige Scanfiguren erzeugt werden können. Der Regelfall wird allerdings eine lineare Anordnung nebeneinander sein. Möglich sind aber genauso die Anordnungen in zwei oder mehr Zeilen oder in beliebigen Formen.

Das Licht, das in den optischen Scanner eingeleitet wird, kann z.B. durch eine Glasfaser, die z.B. auf der Rotationsachse endet, eingeleitet werden. Möglich ist aber auch die Verwendung eines Tappers anstelle der einen Glasfaser, um mehrere Lichtquellen zusammenzuführen. Dadurch kann sowohl die Scanfrequenz als auch die Leuchtdichte erhöht werden.

Erfindungsgemäß ist eine Optik vorgesehen, die im Strahlengang zwischen Lichteinleitung und rotierendem Element und zwischen rotierendem Element und den kreisförmig angeordneten Glasfaserenden liegt. Diese Optik besteht z.B. aus zwei Gliedern, deren Abstand zueinander variiert werden kann, um die Gesamtbrennweite des dadurch gebildeten Objektivs zu verändern. Damit ist ein Ausgleich von Montage- und Fertigungstoleranzen z.B. des abbilder den Elements (Spiegel) und der Glasfaserarrayfassung möglich.

Das rotierende Element ist ein Spiegel (bevorzugt ein Planarspiegel), der gegenüber seiner Rotationsachse (leicht) gekippt ist. Der Spiegel kann auch als dielektrisches Selektivfilter ausgeführt sein, in dieser Ausführung kann auf ein Interferenzfilter im einkoppelnden Strahlengang oder in dem auskoppelnden Strahlengang verzichtet werden. Der Spiegel kann leicht verkippt auf einer Ha terung befestigt sein, die sich parallel zur optischen Achse dreht. Möglich ist ebenso, daß die Drehachse des Spiegels nicht in der optischen Achse des Scanners liegt. In diesem Fall ist auch die Lichtquelle nicht in der optischen Achse angeordnet. Gemeinsam ist bei den Ausführungen aber die Tatsache, daß der Spiegel gegenüber seiner Rotationsachse gekippt ist.

Anstelle eines Planarspiegels kann auch ein Hohlspiegel oder ein Manginspiegel verwendet werden, das Objektiv oder die Optik kann dann eingliedrig ausgeführt werden.

Als Antrieb für die rotierenden Elemente ist ein Elektromotor, vorgesehen z.B. ein Schnellfrequenzmotor (Gleichstrom- oder Synchronmotor), dessen Lager z.B. einen Schlagfehler < 0,005 mm aufweist und der eine Auswuchtgüte der Klasse 0,04 besitzt. Die Drehzahl liegt beispielsweise bei 15.000 Umdrehung pro Minute. Sie kann aber auch bis weit über 100.000 Umdrehungen pro Minute erhöht werden. Je nach Anwendung kann auch ein Schrittmotor eingesetzt werden, sodass die Glasfasern auch einzeln angesteuert werden können.

In einer Ausführung kann zur Synchronisierung des rotierenden Elements mit einer gepulsten Lichtquelle ein optischer Markendetektor vorgesehen sein, der die Stellung des rotierenden Elements detektiert und an die Ansteuerung der Lichtquelle weitergeben kann.

Die Erfindung wird anhand von zwei Figuren näher erläutert.

Es zeigen:
- Fig. 1: einen faseroptischen Scanner zum Aufnehmen und Abgeben von Licht
- Die Fig. 2: ein Detail aus Fig. 1.

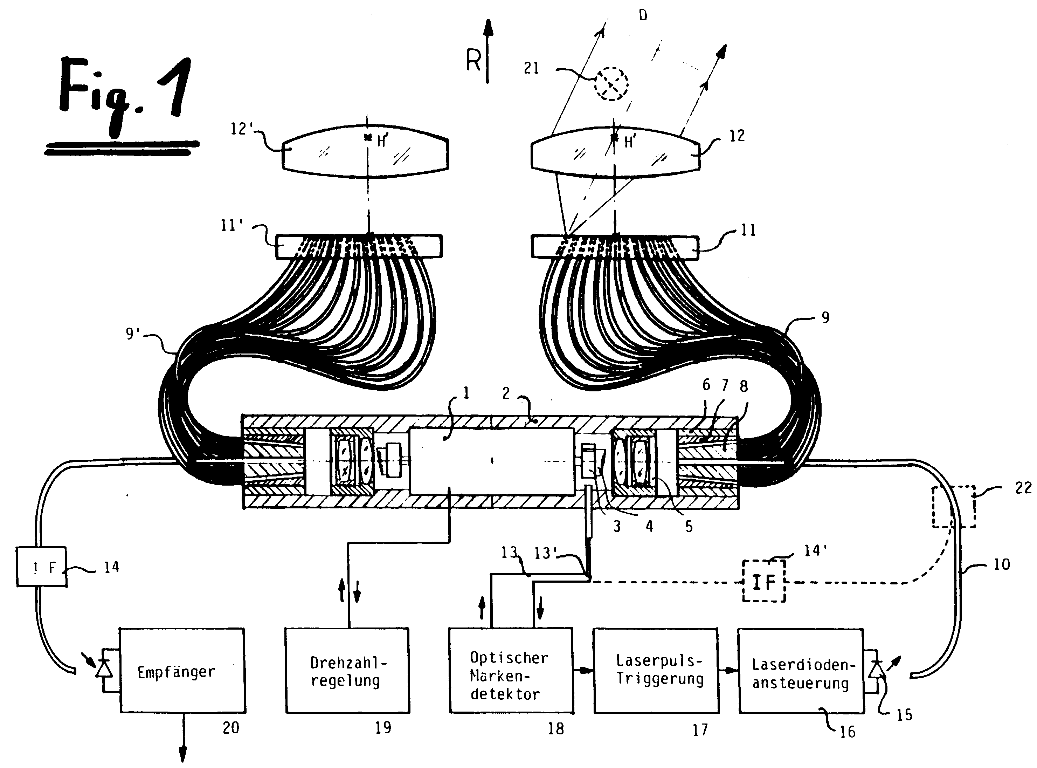

Fig. 1 zeigt einen faseroptischen Scanner, der sowohl zur Lichtaufnahme als auch zur Lichtabgabe geeignet ist. Er ist symmetrisch aufgebaut und besitzt links einen empfangenden Teil und rechts einen sendenden Teil. Als Lichtquelle wird hier die Laserdiode 15 verwendet. Ihr Licht wird in die Glasfaser 10 eingeleitet, die auf der optischen Achse des faseroptischen Scanners angeordnet ist. Das Lichtbündel, das aus der Glasfaser 10 austritt, wird durch das Objektiv 5 kollimiert. Nach der Reflexion, an dem zur Rotationsachse gekippten Spiegel 4, wird das Lichtbündel durch dasselbe Objektiv 5 wieder gebündelt und in eine Glasfaser des kreisförmigen Glasfaserarrays 9 eingekoppelt. Die Kreisform wird durch die Fassungselemente 6, 7 und 8 erreicht. Durch die Rotation des Spiegels 4, der auf der Achse eines Antriebs 1, mit Hilfe einer Spiegelfassung 3 montiert ist, wird das Lichtbündel der Glasfaser 10 nacheinander in die einzelnen Glasfasern des Glasfaserarrays 9 eingekoppelt. Die Glasfasern des Arrays 9 sind ringförmig und konzentrisch zur lichteinleitenden Glasfaser 10 angeordnet. Das aus den Glasfasern austretende Lichtbündel wird durch ein Objektiv kollimiert. Das Glasfaserarray ist in der Brennebene des Objektivs 12 zeilenförmig angeordnet. Die Glasfaserenden sind in der Fassung 11 so orientiert, daß die Mittelachse des Lichtbündels durch den Hauptpunkt H' des Objektivs geht. Durch diese Anordnung ist es möglich, mit geringsten Transmissionsverlusten einen kollimierten Lichtstrahl mit beliebigem Durchmesser hinsichtlich seiner Richtung mit sehr hoher Geschwindigkeit abzulenken. Alle beweglichen Teile können minimal klein gehalten werden und die Strahlapertur D ist unabhängig von den Abmessungen der bewegten Teile.

Wird als Lichtquelle 15 eine gepulste Laserdiode benützt, so ist eine Synchronisierung der in Drehrichtung abhängigen Winkelposition des Spiegels 4 mit der Position der Glasfasern des Glasfaserarrays erforderlich. Dazu wird die Drehzahl des Motors 1 (im Gehäuse 2) mit der Drehzahlregelung 19 sehr konstant geregelt (Regelabweichung z.B. 100 ppm). Ein optischer Markendetektor 18 erkennt über zwei Glasfasern 13, 13' eine Marke auf der Spiegelfassung 3. Der Markendetektor 18 löst über den Laserpulstrigger 17 entsprechend der Anzahl der Glasfasern im Glasfaserarray 9 Triggerimpulse mit konstanter Frequenz aus. Die Triggerimpulse zünden über die Diodenansteuerung 16 die Pulse der Laserdiode 15.

Die Triggerimpulse können dadurch erzeugt werden, daß das Glasfaserarray 9 mit einer Lichtquelle 21 beleuchtet wird. Der Lichtweg ist dann umgekehrt wie zuvor beschrieben. Das Licht der Lichtquelle 21 kann aus der Glasfaser 10 ausgekoppelt und zum Markendetektor 18 geleitet werden (Auskopplung 22). Über den Markendetektor 18 werden die Triggerimpulse direkt erzeugt. Eine separate Drehzahlregelung 19 und die Laserpulstriggerung 17 entfallen dann. Bei dieser Lösung wird der Trigger direkt durch die Position der betreffenden Glasfaser zur Winkelstellung des Spiegels 4 erzeugt. Das Licht für den Markendetektor 18 kann über einen Glasfaser-Y-Koppler oder über einen Strahlteiler ausgekoppelt werden . Um ein Übersprechen der Pulslaserdiode auf den Markendetektor 18 zu verhindern, kann ein spektrales Filter (IF 14') eingesetzt werden.

Auf der linken Seite der Figur 1 ist das eben beschriebene System symmetrisch zum zweiten Ende der Antriebswelle nochmals angeordnet. Die linke Seite kann als Empfangszweig benutzt werden, das heißt die Arrayfassungen 11 und 11' sind bezüglich ihrer Objektive 12 und 12' so justiert, daß sie dieselben Objektpunkte in einer Entfernung R anpeilen. Die Lichtquelle ist auf der linken Seite dann lediglich durch den Empfänger 20 ersetzt. Mit Hilfe eines Interferenzfilters 14 kann die Signalverarbeitung entscheidend verbessert werden.

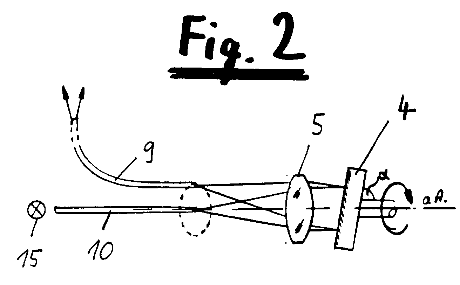

Fig. 2 zeigt schematisch den Strahlenverlauf im faseroptischen Scanner der Fig. 1 auf der rechten Seite. Von der Lichtquelle 15 geht Licht durch die Glasfaser 10, die auf der optischen Achse angeordnet ist. Dieses Licht wird von der Optik 5 auf den um den Winkel a gegenüber der optischen Achse (o.A.) gekippten Spiegel 4 gelenkt. Das dort abgelenkte Licht geht durch die Optik 5 auf einen Punkt der kreisförmigen Faserarrayanordnung 9. Bei Drehung des Spiegels 4 um die optische Achse wird das Licht nacheinander auf jede der im gestrichelt gezeigten Kreis angeordneten Glasfasern geleitet.

Die erfindungsgemäßen faseroptischen Scanner können in Kameras für dreidimensionale Bilder (Entfernungsbilder) für die Robotersteuerung oder für die Schaltung von Lichtimpulsen eingesetzt werden. Auch können damit lichtkodierte Datenströme aufgenommen oder ausgesandt werden.

## Patentansprüche

1. Faseroptischer Scanner zum Aussenden und zur Aufnahme von Licht mit
- einem Sendeteil mit einer Lichtquelle (15), einen ersten Glasfaserarray (9) und einem rotierenden Element (4), das das Licht der Lichtquelle auf die kreisförmig angeordneten einen Enden von Glasfasern des ersten Glasfaserarrays (9) leitet,
- einem Empfangsteil mit einem zweiten Glasfaserarray (9') und einem rotierenden Element, das das hereinkommende Licht von den kreisförmig angeordneten einen Enden von Glasfasern des zweiten Glasfaserarrays (9') auf einen Empfänger (20) leitet,
- einem Elektromotor (1) als gemeinsamem Antrieb der rotierenden Elemente von Sende- und Empfangsteil,
- je einer Optik (5,5') im Strahlengang zwischen der Lichtquelle (15) und den kreisförmig angeordneten einen Glasfaserenden im Sendeteil und zwischen dem Empfänger (20) und den kreisförmig angeordneten einen Glasfaserenden im Empfangsteil,
dadurch gekennzeichnet, daß
der Empfangsteil bezüglich einer Symmetrieebene senkrecht zu den Rotationsachsen der rotierenden Elemente symmetrisch zum Sendeteil aufgebaut ist,
die rotierenden Elemente jeweils als zu ihrer Rotationsachse hin gekippte Spiegel (4) ausgebildet sind, und daß
Objektive (12,12') vorgesehen sind, in deren Brennebenen die jeweils anderen Glasfaserenden angeordnet sind.

## Claims

1. Fibre-optic scanner for transmitting and receiving light having
- a transmitting portion having a light source (15), a first glass fibre array (9) and a rotating element (4) which conveys the light of the light source onto the circularly arranged first ends of glass fibres of the first glass fibre array (9);
- a receiving portion having a second glass fibre array (9') and a rotating element which conveys the incoming light of the circularly arranged first ends of glass fibres of the second glass fibre array (9') to a receiver (20);
- an electrical motor (1) as a common drive of the rotating elements of the transmitting and receiving portions;
- a respective optical device (5, 5') in the path of rays between the light source (15) and the circularly arranged first glass fibre ends in the transmitting portion and between the receiver (20) and the circularly arranged first glass fibre ends in the receiving portion,
characterised in that
the receiving portion is constructed symmetrically with respect to the transmitting portion relative to a plane of symmetry perpendicular to the axes of rotation of the rotating elements,
each of the rotating elements is in the form of a mirror (4) which is tilted towards its axis of rotation, and in that
lenses (12, 12') are provided, in the focal planes of which the respective other glass fibre ends are arranged.

## Revendications

1. Scanner à fibres optiques pour l'émission et la réception de lumière, comprenant
- une partie d'émission munie d'une source de lumière (15), un premier système de fibres optiques (9) et un élément tournant (4) qui dirige la lumière émise par la source de lumière sur les extrémités des fibres optiques du premier système de fibres optiques (9) disposées en cercle,
- une partie de réception avec un second système de fibres optiques (9') et un élément tournant qui dirige la lumière incidente, des extrémités des fibres optiques du second système de fibres optiques (9') disposées en cercle, vers un récepteur (20),
- un moteur électrique (1) servant d'entraînement commun des éléments tournants des parties d'émission et de réception,
- respectivement un système optique (5, 5') dans le trajet des rayons entre la source de lumière (15) et les extrémités des fibres optiques disposées en cercle dans la partie d'émission et entre le récepteur (20) et les extrémités des fibres optiques disposées en cercle dans la partie de réception,
**caractérisé en ce** que, par rapport à un plan de symétrie perpendiculaire aux axes de rotation des éléments tournants, la partie de réception et la partie d'émission présentent des structures symétriques, que les éléments tournants sont à chaque fois réalisés sous la forme de miroirs (4) inclinés vers leur axe de rotation, et qu'il comprend des objectifs (12, 12') dans les plans focaux desquels sont disposées respectivement les extrémités des fibres de l'autre système de fibres optiques.
